# FASCICULE DE BREVET EUROPEEN

(11) **EP 2 376 900 B1**
(45) Date de publication et mention de la délivrance du brevet: **07.01.2015**
(21) Numéro de dépôt: 10700736.1
(22) Date de dépôt: 12.01.2010
(51) Int. Cl.: G01N 21/15, G01N 21/71, F27D 21/00, C21C 5/52, C21C 5/46

(54) **TÊTE DE MESURE DE TYPE LIBS POUR L'ANALYSE DE COMPOSÉS DANS UN ENVIRONNEMENT POUSSIÉREUX ET/OU À HAUTE TEMPÉRATURE**
LIBS-MESSKOPF FÜR DIE ANALYSE VON VERBINDUNGEN IN EINER STAUBIGEN UMGEBUNG UND/ODER BEI HOHER TEMPERATUR
LIBS-TYPE MEASUREMENT HEAD FOR ANALYSING COMPOUNDS IN A DUSTY ENVIRONMENT AND/OR AT HIGH TEMPERATURE

(30) Priorité: 15.01.2009 BE 200900019
(43) Date de publication de la demande: 19.10.2011
(73) Titulaire: Centre de Recherches Métallurgiques asbl - Centrum voor Research in de Metallurgie vzw, 1000 Bruxelles (BE)
(72) Inventeur: MONFORT, Guy, B-4420 Montegnee (BE); NOVILLE, Jean-François, B-4041 Milmort (BE); BELLAVIA, Luigi, B-4610 Beyne-heusay (BE)
(74) Mandataire: Lerho, Marc J. A.
(86) Numéro de dépôt international: PCT/EP2010/050300
(87) Numéro de publication internationale: WO 2010/081807

(56) Documents cités:
- EP-A- 1 452 609
- WO-A-01/35082
- US-A- 5 904 893
- US-A1- 2003 197 125
- NOLL R ET AL: "Laser-induced breakdown spectroscopy?From research to industry, new frontiers for process control" SPECTROCHIMICA ACTA PART B, [Online] vol. 63, 27 août 2008 (2008-08-27), pages 1159-1166, XP002528135 online [extrait le 2009-05-14]
- NOLL R ET AL: "Laser-induced breakdown spectroscopy- applications for prodution control and quality assurance in the steel industry" SPECTROCHIMICA ACTA PART B: ATOMIC SPECTROSCOPY, [Online] vol. 56, no. 6, 29 juin 2001 (2001-06-29), pages 637-649, XP002528136 [extrait le 2009-05-13]

## Description

### Objet de l'invention

La présente invention se rapporte à une installation comportant un capteur qui doit être utilisé dans un environnement poussiéreux et/ou chaud et plus particulièrement, à une tête de mesure LIBS optimisée pour l'analyse de composés liquides et/ou à haute température.

La présente invention s'inscrit dans la continuité des améliorations à apporter à l'installation à tête de mesure LIBS décrite dans la demande de brevet belge BE 2008/0271.

### Arrière-plan technologique et état de la technique

Dans l'industrie métallurgique ou verrière, notamment, l'analyse chimique de bains liquides est nécessaire pour diverses raisons.

La principale est d'en déterminer la composition afin d'assurer une qualité et des propriétés spécifiques au produit final. C'est le cas pour l'aluminium, les aciers inoxydables, le verre, etc. C'est aussi le cas pour des composés qui doivent servir de revêtement sur un substrat donné pour en améliorer les propriétés, comme par exemple les bains de zinc et ses composés pour la galvanisation ou d'aluminium pour les tôles aluminiées.

Une autre raison est de pouvoir déduire de cette analyse les dérives du procédé de fabrication et agir sur celui-ci pour en garantir la bonne marche et un fonctionnement stable. C'est le cas notamment au haut-fourneau, où la mesure de la teneur en silicium dans la fonte permet d'avoir une idée de la température du creuset et de son évolution. En agissant suffisamment rapidement sur les conditions opératoires, on peut éviter des dérives très difficiles à compenser vu les temps de réaction assez longs d'un tel outil de fabrication.

A l'heure actuelle, la façon de procéder pour effectuer ces analyses consiste le plus souvent à prélever manuellement, à l'aide d'un récipient adapté, un échantillon du bain liquide. Celui-ci est refroidi puis envoyé dans un laboratoire d'analyse où les mesures sont généralement faites à l'aide d'un spectromètre ou d'un appareil de fluorescence à rayons X. Cette méthode demande la présence d'un opérateur près du bain liquide à haute température, ce qui présente des risques non négligeables. De plus elle est discontinue et le nombre d'échantillons prélevés est limité pour une question de coût. Enfin, les temps de transfert et de préparation des échantillons font que les résultats ne sont pas obtenus instantanément. Ceci peut donc avoir des conséquences négatives, surtout lorsque les mesures sont effectuées dans un but de régulation du procédé.

Plus récemment, des tentatives de mesures par la méthode spectroscopique LIBS *(Laser-Induced Breakdown Spectroscopy)* se sont développées. Cette méthode utilise un laser pulsé (impulsions de 10 ns typiquement) de forte énergie (typiquement 100 à 1000 mJ) dont le faisceau est focalisé dans la cible constituée par le produit liquide où il génère localement un plasma dont la lumière émise est analysée par un spectromètre (spectroscopie d'émission atomique). On peut ainsi déterminer la concentration d'une série d'éléments grâce à l'intensité émise à des longueurs d'onde spécifiques.

Cette méthode est ainsi présentée par R. Noll et al. ("Laser-induced breakdown spectroscopy - From research to industry, new frontiers for process control", Spectrochimica Acta Part B, Vol.63, 27 août 2008, pages 1159-1166) pour l'analyse d'échantillons métallurgiques prélevés dans le laitier dans une installation de dégazage sous vide permettant une analyse plus rapide sur site qu'avec les techniques conventionnelles.

Cette méthode a été appliquée avec succès au stade industriel pour la caractérisation de bains de verre. Dans ce cas, le système LIBS est placé à distance suffisante pour éviter les effets de la chaleur et la lumière est captée à l'aide d'un télescope. Pour des bains de métaux liquides, cette procédure est difficilement applicable car la présence d'oxydes ou d'impuretés à la surface altère la mesure.

Des systèmes ont alors été développés dans lesquels l'extrémité d'un tube est plongée sous la surface du liquide (voir par exemple JP-A-60 042644, M. SABSABI et al., *Determination of aluminium and iron content in molten zinc using laser-induced breakdown spectroscopy,* 3rd International Conférence LIBS_2004, Sep. 28-Oct. 1, 2004, Torremolinos, Spain). Le faisceau laser et la lumière du plasma passent dans ce tube. Divers procédés assurent que l'endroit où se forme le plasma reste à un niveau constant pour garantir une focalisation optimale du laser. De tels systèmes ont été appliqués industriellement pour le zinc et l'aluminium.

Pour des métaux à plus haut point de fusion, ces dispositifs ne sont généralement pas applicables car le rayonnement auquel sont soumis le laser et le spectromètre est trop intense pour assurer un fonctionnement fiable.

En principe, certains composants (optiques) résistent à des températures élevées et peuvent, par conséquent, se trouver à des distances relativement faibles de matériaux à haute température. Cependant, il peut être intéressant de les maintenir à une température beaucoup plus basse et constante afin d'éviter des problèmes d'alignement, de focalisation et de dilatation différentielle. De plus, cela permet d'augmenter substantiellement leur durée de vie.

A l'heure actuelle, lorsque des lentilles ou autres composants optiques sont placés près de la zone à haute température, un refroidissement local est parfois appliqué, mais cela nécessite malgré tout de maintenir les autres éléments sensibles à distance, ce qui pose des problèmes de transport de faisceau laser et de collecte de la lumière provenant du plasma.

Ainsi, des tests sur des fours pilotes ont été effectués en déportant les éléments sensibles loin du bain. Sauf cas particulier, ils ne sont pas applicables en pratique industrielle car ils utilisent un transport de faisceau à miroirs dont le réglage est très délicat, surtout s'il doit se faire sur plusieurs mètres afin de mettre à l'abri les éléments sensibles (Ramaseder N., Gruber J., Heitz J., Baeuerle D., Meyer W., Hochoertler J.: "Le suivi en continu de la composition chimique du métal à l'intérieur des réacteurs métallurgiques avec VAI-CON® Chem", Revue de Métallurgie, 2002, Vol. 99 n°6, pp.509-516).

La demande BE 2008/0271 précitée propose une solution à ces problèmes de transport par l'utilisation de fibres spéciales telles que par exemple des fibres en saphir. Cependant, l'utilisation de fibres spéciales génère des difficultés liées à la nécessité d'obtenir un faisceau de faible diamètre à l'entrée de cette fibre, comme un risque de claquage dans l'air suite à la densité de puissance très élevée ou l'utilisation délicate d'un compartiment sous vide à l'extrémité de la fibre.

R. Noll et al. ("Laser-induced breakdown spectrometry - applications for production control and quality assurance in the steel industry",Spectrochimica Acta Part B, Vol. 56, n°6, 29 juin 2001, pages 637-649) proposent une installation LIBS pour l'analyse d'un bain d'acier à l'aide d'un tube réfractaire plongé dans le bain où le tube est muni d'un système de refroidissement. Dans cette installation, le laser et le spectromètre sont situés à côté du bain dans un caisson de protection et, en conséquence, des moyens de transport du faisceau laser depuis le caisson vers le tube réfractaire sont requis.

Outre les effets de la chaleur, les composants optiques ainsi que le faisceau laser doivent également être protégés des fumées et poussières éventuelles rencontrées dans l'environnement immédiat des bains portés à très haute température. Dans les environnements poussiéreux, un courant gazeux est souvent envoyé dans un tube situé entre le liquide à analyser et l'optique mais les dispositifs connus font usage de tubes étroits, ce qui réduit la taille de l'optique et donc la sensibilité de la mesure.

### Buts de l'invention

La présente invention vise à fournir une solution qui permette de s'affranchir des inconvénients de l'état de la technique.

L'invention vise en particulier à fournir un dispositif protégeant une tête de mesure de type LIBS de la chaleur, des poussières et de la fumée.

L'invention a également pour but de permettre des mesures à proximité d'un bain porté à haute température et ainsi éviter les problèmes liés au transport du faisceau laser.

### Principaux éléments caractéristiques de l'invention

La présente invention divulgue une installation de mesure munie d'un capteur destiné à l'analyse chimique d'un bain porté à haute température dans un environnement poussiéreux, et munie d'un dispositif de refroidissement et de protection contre les fumées et poussières, comprenant une embase de préférence horizontale située au-dessus du bain à analyser et supportant un caisson étanche contenant des éléments sensibles à protéger, ladite installation étant caractérisée en ce qu'elle comprend des moyens de refroidissement faisant écran au rayonnement émanant du bain et assurant l'évacuation de la chaleur transmise par conduction, lesdits moyens de refroidissement comprenant un circuit de refroidissement par eau situé dans l'embase de préférence horizontale et au moins quatre radiateurs à eau formant une enceinte autour du caisson étanche et montés pivotants sur l'embase au moyen de charnières.

Des modes d'exécution particuliers de l'invention comportent au moins une ou plusieurs des caractéristiques suivantes:
- le capteur est une tête d'analyse par spectroscopie laser-plasma de type LIBS, pour *Laser-Induced Breakdown Spectroscopy ;*
- l'embase est solidaire d'un tube, de préférence vertical, terminé par une portion d'un réfractaire sous forme de buse apte à plonger dans le bain à analyser et comprenant un second circuit de refroidissement par eau situé dans une partie supérieure, de préférence cylindrique, dudit tube ;
- les charnières sont configurées de manière telle que les radiateurs à eau soient soit positionnés verticalement soit basculés horizontalement ;
- les radiateurs, lorsqu'ils sont positionnés verticalement, délimitent un espace parallélépipédique dans lequel le caisson étanche est enfermé ;
- les éléments sensibles à protéger sont un laser et des optiques ;
- le caisson étanche comprend en sa partie inférieure une protubérance cylindrique fermée par un hublot transparent ;
- la protubérance cylindrique prend place dans la partie supérieure refroidie du tube solidaire de l'embase permettant ainsi le passage d'un faisceau laser jusqu'au bain et la collecte de la lumière du plasma généré par ledit faisceau dans le bain ;
- l'installation comporte des moyens de protection contre la fumée et/ou les poussières ;
- lesdits moyens de protection comprennent un ventilateur ou un surpresseur déporté insufflant un débit de fluide réglable dans une tubulure latérale connectée dans le haut du tube solidaire de l'embase ;
- la position et l'inclinaison de la tubulure latérale sont calculées pour que l'ensemble du tube soit balayé par le fluide, nettoyant également la surface inférieure du hublot du caisson ;
- le caisson est équipé à sa partie supérieure d'un système vortex qui génère un courant d'air refroidi à partir d'une alimentation en air comprimé ;
- le caisson est équipé à sa partie inférieure d'une ouverture munie d'une vanne de réglage qui permet d'ajuster une surpression générée dans le caisson par l'air comprimé alimentant le vortex et l'extraction de chaleur générée par les éléments se trouvant dans le caisson ;
- les parois externes et/ou internes du caisson sont tapissées d'un matériau isolant thermiquement ;
- la partie réfractaire du tube est biseautée de manière à ce que la partie la plus longue soit située en amont du flux de liquide du bain à analyser ;
- un obturateur refroidi est intercalé près de l'extrémité supérieure du tube vertical ;
- l'obturateur refroidi est télécommandé.

### Brève description des figures

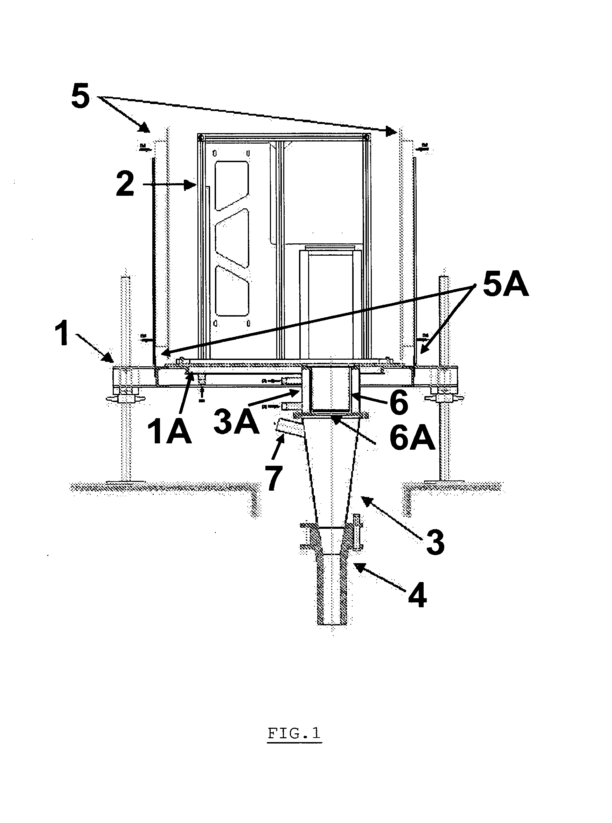

La figure 1 représente schématiquement le dispositif selon une forme d'exécution préférée proposée par la présente invention.

### Description d'une forme d'exécution préférée de l'invention

L'objet principal de l'invention consiste à fournir un dispositif de refroidissement et de protection contre les fumées et poussières d'un capteur. Pour être efficace, le système de refroidissement doit faire barrière au rayonnement tout en assurant une évacuation efficace des calories transmises par conduction. Plus particulièrement, l'invention s'applique à une tête de mesure LIBS, destinée à l'analyse de composés liquides et/ou à haute température.

Le dispositif proposé selon l'invention se compose essentiellement d'une embase de préférence horizontale 1 et d'un caisson étanche 2.

L'embase horizontale 1 est placée au-dessus du liquide à analyser et contient un tube de préférence vertical 3 terminé par une portion d'un réfractaire en forme de buse 4 plongeant dans le liquide. Dans cette embase 1 se trouve incorporé un circuit de refroidissement par eau 1A, dont le rôle essentiel est de faire écran au rayonnement de manière à diminuer la température des éléments qui sont posés sur l'embase 1. Pour la même raison, la partie supérieure cylindrique du tube vertical 3, connectée sous l'embase 1, comporte également un circuit de refroidissement par eau 3A. Sur l'embase 1 sont en outre fixés quatre radiateurs à eau 5, montés sur charnières 5A. Lorsqu'ils sont placés verticalement, ils délimitent un espace parallélépipédique dans lequel se placent les éléments sensibles à protéger de la chaleur. Lorsqu'on les bascule horizontalement, ils dégagent cet espace et permettent un retrait facile des éléments sensibles.

Le caisson étanche 2 contient les éléments sensibles à protéger de la chaleur, des poussières et de la fumée, c'est-à-dire le laser et les optiques dans le cas d'une tête de mesure LIBS. Ce caisson 2, qui occupe l'espace compris entre les quatre radiateurs 5 de l'embase 1, comprend, à sa partie inférieure, une protubérance cylindrique 6 fermée par un hublot transparent 6A. Celle-ci prend place dans l'extrémité supérieure refroidie 3A du tube 3 de l'embase 1 et permet ainsi le passage du faisceau laser jusqu'au liquide à mesurer et la collecte de la lumière du plasma généré par ledit faisceau.

Le caisson 2 est équipé à sa partie supérieure d'un système vortex qui génère un courant d'air refroidi à partir d'une alimentation en air comprimé (non représenté). A la partie inférieure du caisson, ou à tout autre endroit adapté, se trouve aussi une ouverture, munie d'une vanne de réglage, qui permet d'ajuster la surpression générée dans le caisson par l'air comprimé alimentant le vortex et l'extraction des calories générées par l'équipement. Les parois internes ou externes du caisson sont optionnellement tapissées d'un matériau isolant thermiquement.

Enfin, la protection contre les poussières et la fumée est réalisée par insufflation, à l'aide d'un ventilateur ou d'un surpresseur déporté, d'un débit d'air ou de gaz inerte réglable dans une tubulure latérale 7 connectée dans le haut de la partie conique du tube vertical 3 de l'embase 1. La position et l'inclinaison de cette tubulure 7 sont calculées pour que l'ensemble du tube vertical 3 soit balayé par le fluide, qui nettoie également la surface inférieure du hublot 6A du caisson 2.

Selon une forme d'exécution avantageuse, l'extrémité de la partie réfractaire 4 du tube 3 sera biseautée de manière à ce que la partie la plus longue soit située en amont du flux de liquide à analyser. Cette configuration permet une circulation plus aisée de l'air ou du gaz entraînant les poussières. De plus, le pied biseauté écarte de la zone de mesure les particules surnageantes et évite ainsi leur emprisonnement qui pourrait perturber la mesure. Enfin, en favorisant le renouvellement du liquide à analyser à l'endroit de la mesure, ce système retarde également la solidification éventuelle du liquide et le bouchage du tube.

Selon une autre forme d'exécution particulièrement avantageuse, un obturateur refroidi, et éventuellement télécommandé est intercalé près de l'extrémité supérieure du tube vertical 3. Ce dispositif est fermé entre les périodes de mesure et évite ainsi un échauffement par rayonnement du caisson étanche 2 pendant les périodes d'arrêt entre deux mesures.

### Avantages de l'invention

Le dispositif décrit ici permet ainsi de placer des composants sensibles, tels que le laser, au niveau de la tête de mesure. On évite donc les problèmes de transport de faisceau laser, l'utilisation de fibres spéciales (en saphir par exemple) et les difficultés liées à la nécessité d'obtenir un faisceau de faible diamètre à l'entrée de cette fibre.

De plus, le dispositif proposé maintient les fumées et poussières éventuelles à l'écart des composants optiques et du trajet que suit le faisceau laser. Ceci permet donc les mesures dans un environnement poussiéreux sans limitation excessive de la taille de l'optique.

## Revendications

1. Installation de mesure munie d'une tête d'analyse par spectroscopie laser-plasma de type LIBS, pour *Laser-Induced Breakdown Spectroscopy,* destinée à l'analyse chimique d'un bain porté à haute température dans un environnement poussiéreux, et munie d'un dispositif de refroidissement et de protection contre les fumées et poussières, comprenant une embase de préférence horizontale (1) supportant un caisson étanche (2) contenant un laser et des optiques à protéger, ladite installation étant **caractérisée en ce qu'**elle comprend des moyens de refroidissement faisant écran au rayonnement émanant du bain et assurant l'évacuation de la chaleur transmise par conduction, lesdits moyens de refroidissement comprenant un circuit de refroidissement par eau (1A) situé dans l'embase de préférence horizontale (1) et au moins quatre radiateurs à eau (5) formant une enceinte autour du caisson étanche (2) et montés pivotants sur l'embase (1) au moyen de charnières (5A) et **en ce que** l'embase est située au-dessus du bain à analyser.

2. Installation selon la revendication 1, **caractérisée en ce que** l'embase (1) est solidaire d'un tube (3), de préférence vertical, terminé par une portion d'un réfractaire sous forme de buse (4) apte à plonger dans le bain à analyser et comprenant un second circuit de refroidissement par eau (3A) situé dans une partie supérieure, de préférence cylindrique, dudit tube (3).

3. Installation selon la revendication 1, **caractérisée en ce que** les charnières (5A) sont configurées de manière telle que les radiateurs à eau (5) soient soit positionnés verticalement soit basculés horizontalement.

4. Installation selon la revendication 3, **caractérisée en ce que** les radiateurs (5), lorsqu'ils sont positionnés verticalement, délimitent un espace parallélépipédique dans lequel le caisson étanche (2) est enfermé.

5. Installation selon la revendication 2, **caractérisée en ce que** le caisson étanche (2) comprend en sa partie inférieure une protubérance cylindrique (6) fermée par un hublot transparent (6A).

6. Installation selon les revendications 5, **caractérisée en ce que** la protubérance cylindrique (6) prend place dans la partie supérieure refroidie (3A) du tube (3) solidaire de l'embase (1) permettant ainsi le passage d'un faisceau laser jusqu'au bain et la collecte de la lumière du plasma généré par ledit faisceau dans le bain.

7. Installation selon la revendication 2, **caractérisée en ce qu'**elle comporte des moyens de protection contre la fumée et/ou les poussières.

8. Installation selon la revendication 7, **caractérisée en ce que** lesdits moyens de protection comprennent un ventilateur ou un surpresseur déporté insufflant un débit de fluide réglable dans une tubulure latérale (7) connectée dans le haut du tube (3) solidaire de l'embase (1).

9. Installation selon la revendication 8, **caractérisée en ce que** la position et l'inclinaison de la tubulure latérale (7) sont calculées pour que l'ensemble du tube (3) soit balayé par le fluide, nettoyant également la surface inférieure du hublot (6A) du caisson (2).

10. Installation selon la revendication 1, **caractérisée en ce que** le caisson (2) est équipé à sa partie supérieure d'un système vortex qui génère un courant d'air refroidi à partir d'une alimentation en air comprimé.

11. Installation selon la revendication 10, **caractérisée en ce que** le caisson (2) est équipé à sa partie inférieure d'une ouverture munie d'une vanne de réglage qui permet d'ajuster une surpression générée dans le caisson (2) par l'air comprimé alimentant le vortex et l'extraction de chaleur générée par les éléments se trouvant dans le caisson (2).

12. Installation selon la revendication 1 **caractérisé en ce que** les parois externes et/ou internes du caisson (2) sont tapissées d'un matériau isolant thermiquement.

13. Installation selon la revendication 2, **caractérisée en ce que** la partie réfractaire (4) du tube (3) est biseautée de manière à ce que la partie la plus longue soit située en amont du flux de liquide du bain à analyser.

14. Installation selon la revendication 2, **caractérisée en ce qu'**un obturateur refroidi est intercalé près de l'extrémité supérieure du tube vertical (3).

15. Installation selon la revendication 14 **caractérisée en ce que** l'obturateur refroidi est télécommandé.

## Patentansprüche

1. Messvorrichtung, die mit einem Laser-Plasma-Spektroskopie-Analysekopf vom Typ LIBS für *Laser-Induced Breakdown Spectroscop* ausgestattet ist, die zur chemischen Analyse eines auf hohe Temperatur erhitzten Bads in einer staubigen Umgebung bestimmt ist, und mit einer Kühl- und Schutzvorrichtung gegen Rauch und Staub ausgestattet ist, die eine vorzugsweise horizontale Basis (1) umfasst, die einen dichten Behälter (2) stützt, der einen Laser und zu schützende Optik enthält, wobei die Vorrichtung **dadurch gekennzeichnet ist, dass** sie Kühlmittel umfasst, die gegenüber der Strahlung des Bads einen Schild bilden und die Ableitung der durch Konduktion übermittelten Wärme sicherstellen, wobei die Kühlmittel einen Wasserkühlkreis (1A) umfassen, der sich in der vorzugsweisen horizontalen Basis (1) befindet und mindestens vier Wasserradiatoren (5), die um den dichten Behälter (2) einen Gürtel bilden und mit Hilfe von Scharnieren (5A) schwenkbar auf der Basis (1) montiert sind und dass sich die Basis über dem zu analysierenden Bad befindet.

2. Vorrichtung nach Anspruch 1, **dadurch gekennzeichnet, dass** die Basis (1) mit einem vorzugsweise vertikalen Rohr (3) verbunden ist, das in einem Abschnitt eines Feuerfestmaterials in Form einer Düse (4) endet, die imstande ist, in das zu analysierende Bad zu tauchen, und einen zweiten Wasserkühlkreis (3A) umfasst, der sich in einem oberen, vorzugsweise zylindrischen Teil des Rohrs (3) befindet.

3. Vorrichtung nach Anspruch 1, **dadurch gekennzeichnet, dass** die Scharniere (5A) derart konfiguriert sind, dass die Wasserradiatoren (5) entweder vertikal positioniert oder horizontal gekippt sind.

4. Vorrichtung nach Anspruch 3, **dadurch gekennzeichnet, dass** die Radiatoren (5), wenn sie vertikal positioniert sind, einen parallelepipedischen Raum begrenzen, in dem der dichte Behälter (2) eingeschlossen ist.

5. Vorrichtung nach Anspruch 2, **dadurch gekennzeichnet, dass** der dichte Behälter (2) in seinem unteren Teil einen zylindrischen Vorsprung (6) umfasst, der mit einer durchsichtigen Luke (6A) verschlossen ist.

6. Vorrichtung nach Anspruch 5, **dadurch gekennzeichnet, dass** der zylindrische Vorsprung (6) im gekühlten oberen Teil (3A) des Rohrs (3), das mit der Basis (1) verbunden ist, eingelassen ist, wodurch der Durchgang eines Laserstrahls bis zum Bad und das Sammeln des Lichts des Plasmas, das der Strahl in dem Bad erzeugt, ermöglicht wird.

7. Vorrichtung nach Anspruch 2, **dadurch gekennzeichnet, dass** sie Schutzmittel gegen Rauch und/oder Staub aufweist.

8. Vorrichtung nach Anspruch 7, **dadurch gekennzeichnet, dass** die Schutzmittel einen Lüfter oder einen seitlichen Kompressor umfassen, die eine einstellbaren Fluidmenge in einen seitlichen Rohrstutzen (7) blasen, der oben am Rohr (3), wo es mit der Basis (1) verbunden ist, angeschlossen ist.

9. Vorrichtung nach Anspruch 8, **dadurch gekennzeichnet, dass** die Position und die Neigung des seitlichen Rohrstutzens (7) derart berechnet sind, dass das gesamte Rohr (3) von dem Fluid bestrichen wird, so dass ebenfalls die Innenfläche der Luke (6A) des Behälters (2) gereinigt wird.

10. Vorrichtung nach Anspruch 1, **dadurch gekennzeichnet, dass** der Behälter (2) in seinem oberen Teil mit einem Wirbel-System ausgestattet ist, das ab einer Druckluftversorgung einen Kühlluftstrom erzeugt.

11. Vorrichtung nach Anspruch 10, **dadurch gekennzeichnet, dass** der Behälter (2) in seinem unteren Teil mit einer Öffnung ausgestattet ist, die mit einem Regulierventil ausgestattet ist, das erlaubt, einen Überdruck zu korrigieren, der in dem Behälter (2) von der Druckluft erzeugt wird, die den Wirbel versorgt, und die Ableitung von von den Elementen erzeugter Wärme, die sich in dem Behälter (2) befinden.

12. Vorrichtung nach Anspruch 1, **dadurch gekennzeichnet, dass** die Außen- und/oder Innenwände des Behälters (2) mit einem thermisch isolierenden Material verkleidet sind.

13. Vorrichtung nach Anspruch 2, **dadurch gekennzeichnet, dass** der feuerfeste Teil (4) des Rohrs (3) derart abgeschrägt ist, dass sich der längste Teil im Verhältnis zum Flüssigkeitsstrom des zu analysierenden Bads stromaufwärts befindet.

14. Vorrichtung nach Anspruch 2, **dadurch gekennzeichnet, dass** in der Nähe des oberen Endes des vertikalen Rohrs (3) ein gekühlter Verschluss zwischengestellt ist.

15. Vorrichtung nach Anspruch 14, **dadurch gekennzeichnet, dass** der gekühlte Verschluss ferngesteuert ist.

## Claims

1. A measurement installation provided with a laser-plasma spectroscopy analysis head of the LIBS type (Laser-Induced Breakdown Spectroscopy), intended for the chemical analysis of a bath brought to a high temperature in a dusty environment, and provided with a cooling and protection device against fumes and dusts, comprising a preferably horizontal base (1) supporting a sealed box (2) with a laser and optics to be protected, said installation being **characterized in that** it comprises cooling means shielding the radiation coming from the bath and ensuring the removal of the conduction-transmitted heat, said cooling means comprising a water cooling circuit (1A) located in the preferably horizontal base (1) and at least four water radiators (5) forming an enclosure around the sealed box (2) and pivotally mounted on the base (1) by means of hinges (5A), and **in that** the base is located above the bath to be analyzed.

2. The installation according to Claim 1, **characterized in that** the base (1) is secured to a preferably vertical tube (3), terminated by a portion of a refractory having the shape of a nozzle (4) able to be immersed in the bath to be analyzed and comprising a second water cooling circuit (3A) located in a preferably cylindrical, upper portion of said tube (3).

3. The installation according to claim 1, **characterized in that** the hinges (5A) are configured so that the water radiators (5) are either positioned vertically or tilted horizontally.

4. The installation according to Claim 3, **characterized in that** the radiators (5), when positioned vertically, delimit a parallelepipedal space in which the sealed box (2) is enclosed.

5. The installation according to Claim 2, **characterized in that** the sealed box (2) comprises in its lower portion a cylindrical protrusion (6) closed by a transparent window (6A).

6. The installation according to Claim 5, **characterized in that** the cylindrical protrusion (6) is placed in the upper cooled portion (3A) of the tube (3) secured to the base (1) thereby allowing the passing of a laser beam as far as the bath and the collecting of the light of the plasma generated by said beam in the bath.

7. The installation according to Claim 2, **characterized in that** it comprises protection means against smoke and/or dusts.

8. The installation according to Claim 7, **characterized in that** said protection means comprise a fan or a remote booster blowing an adjustable fluid flow rate into lateral tubing (7) connected in the top of the tube (3) secured to the base (1).

9. The installation according to Claim 8, **characterized in that** the position and the tilt of the lateral tubing (7) are calculated so that the whole of the tube (3) is swept by the fluid, also cleaning the lower surface of the window (6A) of the box (2).

10. The installation according to Claim 1, **characterized in that** the box (2) is equipped at its upper portion with a vortex system that generates a stream of cooled air from a compressed air supply.

11. The installation according to Claim 10, **characterized in that** the box (2) is equipped at its lower portion with an aperture provided with an adjustment valve that allows to adjust the overpressure generated in the box (2) by the compressed air supplying the vortex and the extraction of heat generated by the elements found in the box (2).

12. The installation according to Claim 1, **characterized in that** the external and/or internal walls of the box (2) are coated with a thermally insulating material.

13. The installation according to Claim 2, **characterized in that** the refractory portion (4) of the tube (3) is beveled so that the longest portion is located upstream from the liquid flow of the bath to be analyzed.

14. The installation according to Claim 2, **characterized in that** a cooled obturator is inserted near the upper end of the vertical tube (3).

15. The installation according to Claim 14, **characterized in that** the cooled obturator is remote-controlled.
